# EUROPÄISCHE PATENTSCHRIFT

(11) **EP 3 151 651 B1**
(45) Veröffentlichungstag und Bekanntmachung des Hinweises auf die Patenterteilung: **16.05.2018**
(21) Anmeldenummer: 15724690.1
(22) Anmeldetag: 27.05.2015
(51) Int. Cl.: A01D 34/28, A01D 34/32

(54) **VERBINDUNGSANORDNUNG ZUM VERBINDEN EINES MÄHMESSERANTRIEBS MIT EINEM HIN- UND HERGEHEND BEWEGBAREN MÄHMESSER**
CONNECTING ARRANGEMENT FOR CONNECTING A MOWER KNIFE DRIVE TO A RECIPROCATING MOWER KNIFE
ENSEMBLE DE LIAISON POUR RELIER UN ENTRAÎNEMENT DE LAME DE FAUCHAGE À UNE LAME DE FAUCHAGE MOBILE SUIVANT UN MOUVEMENT ALTERNATIF

(30) Priorität: 04.06.2014 DE 102014107834
(43) Veröffentlichungstag der Anmeldung: 12.04.2017
(73) Patentinhaber: EWM Eichelhardter Werkzeug- und Maschinenbau GmbH, 57612 Eichelhardt (DE)
(72) Erfinder: SCHUMACHER, Heinrich Günter, 57612 Eichelhardt (DE); ROTH, Andreas, 53819 Neunkrichen-Seelscheid (DE)
(74) Vertreter: Neumann Müller Oberwalleney & Partner Patentanwälte
(86) Internationale Anmeldenummer: PCT/EP2015/061767
(87) Internationale Veröffentlichungsnummer: WO 2015/185422

(56) Entgegenhaltungen:
- DE-A1- 3 208 870
- DE-A1- 4 035 528
- DE-U1- 9 416 675

## Beschreibung

Die Erfindung betrifft eine Verbindungsanordnung zum Verbinden eines Mähmesserantriebs mit einem entlang einer Messerachse hin- und hergehend bewegbaren Mähmesser, insbesondere für landwirtschaftliche Maschinen, wie z.B. Mähdrescher oder Feldhäcksler. Die Verbindungsanordnung weist ein derart gestaltetes Antriebselement auf, dass darüber die Verbindungsanordnung mit dem Mähmesserantrieb gekoppelt werden kann. Ferner weist die Verbindungsanordnung ein derart gestaltetes Abtriebselement auf, dass darüber die Verbindungsanordnung mit einem Mähmesser gekoppelt werden kann, so dass der Mähmesserantrieb über die Verbindungsanordnung mit dem Mähmesser antriebsverbunden ist.

Die DE 40 35 528 C2 beschreibt eine Verbindungsanordnung zwischen einem Mähmesserantrieb und einem linear hin- und hergehend bewegten Mähmesser bei Doppelmesserschneidwerken von Frontmähern.

Die Einleitung der Hubbewegung erfolgt über einen schwenkend bewegten Antriebshebel und einen daran angeschlossenen Mitnehmerzapfen, der ein Verbindungselement darstellt, und ein eine Gelenklagerung umfassendes weiteres Verbindungselement, welches mit dem Mähmesser verbunden ist. Die Gelenkanordnung ist erforderlich, weil der Mitnehmerzapfen durch seine Anbindung an den Antriebshebel dessen Schwenkbewegung folgend auf einer Kreisabschnittsbahn bewegt wird. Da das Mähmesser nur linear hin- und hergehend bewegbar geführt ist, muss die Anordnung im Betrieb ständig sowohl eine Schwenkbewegung des Mitnehmerzapfens zu dem mit dem Mähmesser verbundenen Verbindungselement als auch eine axiale Verstellung des Mitnehmerzapfens zulassen. Das zur Verbindung mit dem Mähmesser dienende erste Verbindungselement weist einen ringartig gestalteten Abschnitt und darin eine kreiszylindrische Bohrung auf. In dieser Bohrung ist ein in Umfangsrichtung geschlossener Zwischenring mit seiner an die Bohrung angepassten kreiszylindrischen Außenfläche aufgenommen und festgesetzt. Der Zwischenring besitzt eine hohlkugelige Innenfläche. An dieser hohlkugeligen Innenfläche ist ein in Umfangsrichtung geschlossener Lagerring mit einer kugeligen Außenfläche schwenkbeweglich aufgenommen. Der Lagerring weist eine kreiszylindrische Durchgangsbohrung auf. In dieser Durchgangsbohrung sitzt der Mitnehmerzapfen entlang der Achse der Durchgangsbohrung verschiebbar, um die aus der Bewegung des Mitnehmerzapfens mit dem Antriebshebel auf einer Kreisbahn resultierende Lageveränderung zur Verstellachse des Mähmessers ausgleichen zu können.

Es sind aber auch Mähmesserantriebe bekannt, bei denen das Mähmesser durch ein Getriebe, wie es beispielsweise in der DE 39 31 736 C2 oder der DE 10 2005 048 766 A1 beschrieben ist, unmittelbar linear hin- und hergehend angetrieben wird. Ein Antriebszapfen des Getriebes bewegt sich linear hin und her und ist mit einem Antriebselement einer Verbindungsanordnung verbunden, so dass während der Bewegung bei optimaler Ausrichtung des Getriebes und des Mähmessers zueinander keine ständigen Relativbewegungen während des Antreibens des Mähmessers auszugleichen sind. EP 1 832 154 A1 zeigt jedoch eine Einstellungsmöglichkeit, die eine Anpassung der Relativstellung der Teile zueinander beim Einbau ermöglicht. Diese Einstellung wird durch Verspannen der Teile festgelegt, wobei ein leichtes Lösen für den Austausch, zum Beispiel des Mähmessers, möglich bleibt.

Es hat sich jedoch gezeigt, dass aufgrund von Lage- bzw. Fertigungstoleranzen oder Verformungen während des Betriebes bei der Verwendung eines Mähmesserantriebs gemäß der DE 39 31 736 C2 oder der DE 10 2005 048 766 A1 trotz des direkten linearen Antriebs des Mähmessers ein erhöhter Verschleiß aufgrund einer oder mehrerer Fehl- oder Schrägstellungen der Bewegungsachse des Antriebszapfens des Mähmesserantriebs zur Mähmesserachse auftritt.

Aus der DE 94 16 675 U1 ist eine Lagerung für den Mitnehmerstift zum oszillierenden Bewegen eines Mähmessers in Ein- oder Doppelmesserschneidwerken von Mähern bekannt.

Aufgabe der vorliegenden Erfindung ist es daher, eine Verbindungsanordnung bereitzustellen, die Lage- bzw. Fertigungstoleranzen zwischen einem Mähmesserantrieb und einem Mähmesser ausgleicht.

Die Aufgabe wird durch eine Verbindungsanordnung zum Verbinden eines Mähmesserantriebs mit einem entlang einer Messerachse hin- und hergehend bewegbaren Mähmesser gelöst, welche ein Antriebselement zum Verbinden der Verbindungsanordnung mit einem Mähmesserantrieb und ein Abtriebselement zum Verbinden der Verbindungsanordnung mit einem Mähmesser aufweist, wobei das Antriebselement und das Abtriebselement mittels einer Ausgleichsanordnung um drei, vorzugsweise rechtwinklig zueinander angeordnete Drehachsen zueinander drehbar und entlang zumindest zwei der genannten Drehachsen zueinander verschiebbar sind. Weiterhin ist je Drehachse der Ausgleichsanordnung ein separates Lager vorgesehen, über das das Antriebselement und das Abtriebselement zueinander drehbar sind.

Der Vorteil der erfindungsgemäßen Verbindungsanordnung liegt darin, dass Ausgleichsbewegungen zwischen der Bewegung des Mähmesserantriebs und dem Mähmesser, bezogen auf alle Freiheitsgrade bis auf die lineare Hin- und Herbewegung in Richtung der Messerachse, während des Betriebs ermöglicht werden. Es sind demnach Drehbewegungen des Antriebselements und des Abtriebselements um alle Drehachsen im kartesischen Koordinatensystem möglich. Ferner sind lineare Bewegungen entlang zweier der Drehachsen möglich, jedoch nicht in Richtung der Messerachse. Hierzu kann vorgesehen sein, dass die beiden genannten Drehachsen, entlang derer das Antriebselement und das Abtriebselement zueinander verschiebbar sind, rechtwinklig zur Messerachse angeordnet sind. Weiterhin können die Drehbewegungen in den einzelnen Freiheitsgraden unabhängig voneinander stattfinden.

Ferner können auch die Längsbewegungen zu den zwei Freiheitsgraden in Längsrichtung dadurch voneinander unabhängig gestaltet werden, indem das Antriebselement und das Abtriebselement über zwei der genannten Lager zueinander verschiebbar sind.

Gemäß einer bevorzugten Ausführungsform ist vorgesehen, dass die Ausgleichsanordnung ein erstes Gelenkelement und ein zweites Gelenkelement aufweist, dass das Abtriebselement über ein erstes Lager um eine erste Drehachse der genannten Drehachsen drehbar mit dem ersten Gelenkelement verbunden ist, dass das erste Gelenkelement über ein zweites Lager um eine zweite Drehachse der genannten Drehachsen drehbar mit dem zweiten Gelenkelement verbunden ist und dass das zweite Gelenkelement über ein drittes Lager um eine dritte Drehachse der genannten Drehachsen drehbar mit dem Antriebselement verbunden ist.

Ferner kann vorgesehen sein, dass das erste Gelenkelement und das zweite Gelenkelement über das zweite Lager entlang der zweiten Drehachse zueinander verschiebbar sind. Darüber hinaus kann vorgesehen sein, dass das Antriebselement und das zweite Gelenkelement über das dritte Lager entlang der dritten Drehachse zueinander verschiebbar sind.

Um bei dem zweiten Lager und bei dem dritten Lager eine Drehbewegung und eine lineare Bewegung zu ermöglichen, weisen diese jeweils einen Lagerzapfen und eine Lagerbohrung auf, wobei der Lagerzapfen in der Lagerbohrung drehbar und axial verschiebbar aufgenommen ist. Dies kann durch eine Gleitlagerung oder auch durch eine Wälzlagerung dargestellt sein.

Zur Vereinfachung des Abschmierend sämtlicher Lager können diese eine gemeinsame Schmiermittelversorgung aufweisen. Hierbei kann beispielsweise ein Schmiernippel vorgesehen sein, der über Schmierkanäle mit allen Lagern verbunden ist, so dass durch Zuführen von Schmiermittel durch den Schmiernippel alle drei Lager abgeschmiert werden können.

Ein bevorzugtes Ausführungsbeispiel der Erfindung wird im folgenden anhand der Figuren näher erläutert. Hierin zeigt:
- Figur 1: eine perspektivische Darstellung der Verbindungsanordnung mit einem Mähmesser;
- Figur 2: einen Längsschnitt rechtwinklig zur Längsachse der Verbindungsanordnung gemäß Figur 1;
- Figur 3: einen Längsschnitt rechtwinklig zur Hochachse der Verbindungsanordnung gemäß Figur 1, und
- Figur 4: einen Längsschnitt rechtwinklig zur Messerachse der Verbindungsanordnung gemäß Figur 1.

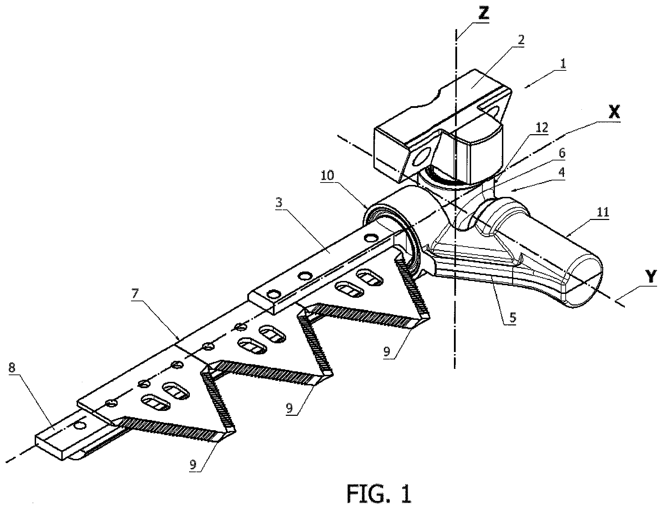

Figur 1 zeigt in perspektivischer Darstellung eine Verbindungsanordnung 1 mit einem Antriebselement 2 und einem Abtriebselement 3, die über eine Ausgleichsanordnung 4 miteinander verbunden sind. Das Antriebselement 2 ist als Antriebsadapter ausgestaltet, der mit einem Antriebszapfen eines Getriebes, wie es beispielsweise in der DE 39 31 736 C2 und der DE 10 2005 048 766 A1 beschrieben ist, verbunden werden kann. Das Abtriebselement 3 ist, wie in Figur 1 dargestellt, mit einem Mähmesser 7 verbunden, wobei das Mähmesser 7 eine Messerschiene 8 umfasst, auf der mehrere Messerklingen 9 befestigt sind.

Über ein vorgenanntes Getriebe wird das Antriebselement 2 entlang der Achse X, welche auch als Messerachse bezeichnet wird, angetrieben, wobei das Antriebselement 2 eine Hin- und Herbewegung vollzieht.

Aufgrund von Fertigungs- und Montagetoleranzen sowie aufgrund von Verformungen der einzelnen Bauteile während des Betriebs können Winkelabweichungen zwischen der Bewegungsrichtung des Antriebszapfens des Getriebes und der Messerachse X auftreten. Dies bedeutet, dass die Messerachse X und die Bewegungsrichtung des Antriebselements 2 nicht parallel zueinander verlaufen. Hierbei kommt es im Betrieb zu Verspannungen des Antriebs und insbesondere des Mähmessers 7, so dass erhöhte Reibkräfte und/oder Biegekräfte auftreten, die zu einem erhöhten Verschleiß führen. Wenn die Bewegungsrichtung des Antriebselements 2 nicht parallel zur Messerachse X verläuft, sind während des Betriebs ständig auftretende Relativbewegungen zwischen dem Antriebselement 2 und dem Abtriebselement 3 auszugleichen. Hierzu dient die Ausgleichsanordnung 4.

Die Ausgleichsanordnung 4 umfasst ein erstes Gelenkelement 5 und ein zweites Gelenkelement 6. Das Abtriebselement 3 ist über ein erstes Lager 10 mit dem ersten Gelenkelement 5 verbunden. Das erste Gelenkelement 5 ist wiederum über ein zweites Lager 11 mit dem zweiten Gelenkelement 6 verbunden und das Antriebselement 2 ist über ein drittes Lager 12 mit dem zweiten Gelenkelement 6 verbunden.

Das erste Lager 10 ermöglicht eine Drehung des Abtriebselements 3 relativ zum ersten Gelenkelement 5 um die Messerachse X. Das erste Lager 10 hält hingegen das Abtriebselement 3 axial unverschieblich zum ersten Gelenkelement 5. Das erste Lager 10 weist somit einen Freiheitsgrad auf.

Das zweite Lager 11 ermöglicht eine Drehbewegung des ersten Gelenkelements 5 und des zweiten Gelenkelements 6 zueinander um eine Längsachse Y, welche senkrecht zur Messerachse X angeordnet ist und in Mährichtung ausgerichtet ist. Das zweite Lager 11 ermöglicht darüber hinaus ein axiales Verschieben des ersten Gelenkelements 5 und des zweiten Gelenkelements 6 relativ zueinander entlang der Längsachse Y. Das zweite Lager 11 weist somit zwei Freiheitsgrade auf.

Das dritte Lager 12 ermöglicht eine Drehbewegung des Antriebselements 2 relativ zum zweiten Gelenkelement 6 um eine Hochachse Z, wobei die Hochachse senkrecht auf der Messerachse X und auf der Längsachse Y steht. Darüber hinaus ermöglicht das dritte Lager 12 eine axiale Verstellung des Antriebselements 2 relativ zum zweiten Gelenkelement 6 entlang der Hochachse Z. Das dritte Lager 12 weist somit zwei Freiheitsgrade auf.

Die Ausgleichsanordnung 4 weist somit fünf Freiheitsgrade auf. Drei Freiheitsgrade ermöglichen eine Drehung um alle drei Achsen X, Y und Z, die gemeinsam auch als Drehachse bezeichnet werden können. Darüber hinaus sind zwei Freiheitsgrade vorgesehen für eine Verschiebung entlang zweier der beiden Achsen.

Für jede Drehung um eine der Achsen X, Y und Z ist ein separates Lager 10, 11, 12 vorgesehen, so dass jede Drehbewegung um eine der Achsen X, Y, Z definiert von einem der Lager 10, 11, 12 ausgeglichen wird. Zwei der Lager dienen für die lineare Bewegung, so dass diese ebenfalls voneinander getrennt sind. Die Lager für die lineare Bewegung müssen jedoch nicht zwingend gleichzeitig eine Drehbewegung ermöglichen. Es ist durchaus auch denkbar, dass für die Drehbewegungen und für die linearen Bewegungen ebenfalls separate Lager vorgesehen sind.

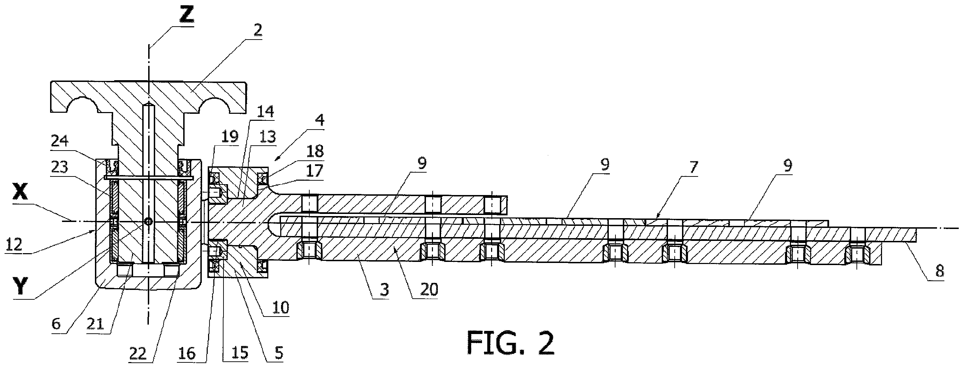

Figur 2 zeigt einen Längsschnitt der Verbindungsanordnung 1 in einer Schnittebene, welche die Messerachse X und die Hochachse Z beinhaltet. Erkennbar sind das erste Lager 10 und das dritte Lager 12, wobei die Messerachse X, welche gleichzeitig die Drehachse des ersten Lagers 10 darstellt, die Hochachse Z, also die Drehachse des dritten Lagers 12, schneidet. Darüber hinaus verläuft auch die Längsachse Y, also die Drehachse des zweiten Lagers 11, durch den Schnittpunkt der Messerachse X und der Hochachse Z, so dass die gesamte Ausgleichsanordnung 4 in diesem Schnittpunkt einen Gelenkmittelpunkt bildet.

Das erste Lager 10 umfasst einen Lagerzapfen 13, der an dem Abtriebselement 3 vorgesehen ist und der in einer Lagerbohrung 14 des ersten Gelenkelements 5 drehbar gelagert ist. Der Lagerzapfen 13 steht von einem Messeranschlussabschnitt 20 des Abtriebselements 3 axial vor und ist durch die Lagerbohrung 14 hindurchgeführt. An dem vom Messeranschlussabschnitt 20 abgewandten Ende weist der Lagerzapfen 13 ein Gewinde 16 auf, auf das eine Mutter 15 aufgeschraubt ist, welche sich axial in Richtung zum Messeranschlussabschnitt 20 gegen das erste Gelenkelement 5 abstützt. In die entgegengesetzte Richtung stützt sich das Abtriebselement 3 über eine Schulter 17 axial gegen das erste Gelenkelement 5 ab. Der Lagerzapfen 13 ist hierbei innerhalb der Lagerbohrung 14 gleitgelagert.

Zur Abdichtung sind zwei Dichtringe 18, 19 vorgesehen, wobei einer der Dichtringe 18 zwischen dem ersten Gelenkelement 5 und dem Abtriebselement 3 angeordnet ist und ein anderer der beiden Dichtringe 19 zwischen dem ersten Gelenkelement 5 und der Mutter 15.

Grundsätzlich ist auch denkbar, dass das erste Gelenkelement 5 den Lagerzapfen aufweist und die Lagerbohrung im Abtriebselement 3 vorgesehen ist. Alternativ zur Gleitlagerung können auch andere Lager vorgesehen sein, wie beispielsweise Wälzlager.

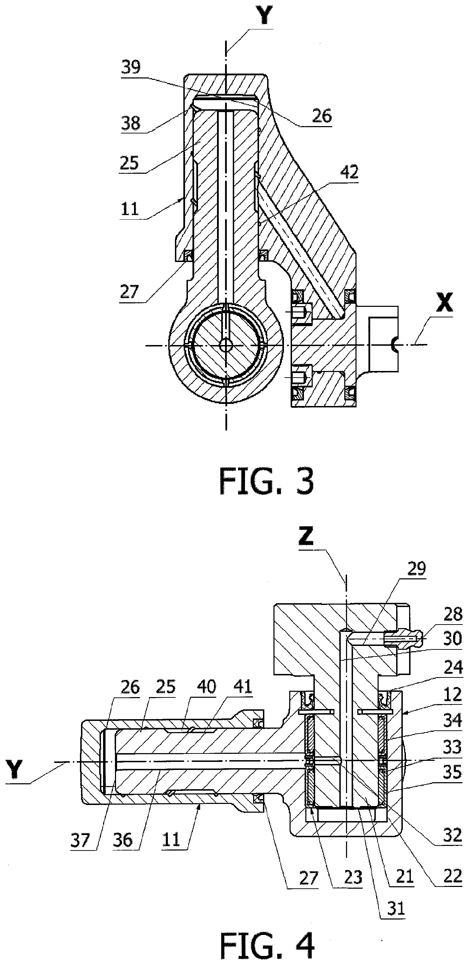

Das dritte Lager 12, das auch in Figur 4 erkennbar ist, umfasst einen Lagerzapfen 21 am Antriebselement 2 und eine Lagerbohrung 22 im zweiten Gelenkelement 6, wobei der Lagerzapfen 21 drehbar in der Lagerbohrung 22 gelagert ist. Hierzu dient ein Nadellager 23. Grundsätzlich wäre an dieser Stelle auch eine andere Lagerung, wie zum Beispiel eine Gleitlagerung oder eine andere Wälzlagerung, möglich. Somit ist der Lagerzapfen 21 innerhalb der Lagerbohrung 22 um die Hochachse Z drehbar. Das Nadellager 23 ermöglicht darüber hinaus eine axiale Verschiebung des Lagerzapfens 21 innerhalb der Lagerbohrung 22 entlang der Hochachse Z.

Die Lagerbohrung 22 ist als Sacklochbohrung ausgestaltet, wobei die Lagerbohrung 22 durch einen Dichtring 24 zwischen dem zweiten Gelenkelement 6 und dem Antriebselement 2 nach außen hin abgedichtet ist.

Grundsätzlich ist auch denkbar, dass das zweite Gelenkelement 6 den Lagerzapfen aufweist und die Lagerbohrung im Antriebselement 2 vorgesehen ist.

Das zweite Lager 11 ist in den Figuren 3 und 4 dargestellt. Das zweite Lager 11 umfasst einen Lagerzapfen 25 des zweiten Gelenkelements 6 und eine Lagerbohrung 26 im ersten Gelenkelement 5, wobei der Lagerzapfen 25 um die Längsachse Y drehbar und entlang dieser axial verschiebbar in der Lagerbohrung 26 aufgenommen ist. Hierzu ist der Lagerzapfen 25 in der Lagerbohrung 26 gleitgelagert. Grundsätzlich ist auch hier eine andere Lagerung, wie zum Beispiel eine Wälzlagerung, vorstellbar. Die Lagerbohrung 26 ist als Sacklochbohrung ausgebildet, welche durch einen Dichtring 27 nach außen hin abgedichtet ist, wobei der Dichtring 27 zwischen dem ersten Gelenkelement 5 und dem zweiten Gelenkelement 6 angeordnet ist.

Auch hier ist wieder grundsätzlich denkbar, dass das erste Gelenkelement 5 den Lagerzapfen aufweist und die Lagerbohrung im zweiten Gelenkelement 6 vorgesehen ist.

Das dritte Lager 12 weist ein Nadellager 23 auf, da das Antriebselement 2 einen Antrieb durch ein oben genanntes Getriebe nicht nur eine Hin- und Herbewegung entlang der Messerachse X vollzieht, sondern auch eine kontinuierliche Drehung um die Hochachse Z. Das dritte Lager 12 hat somit die Drehung des Antriebselements 2 gegenüber dem zweiten Gelenkelement 6 vollständig auszugleichen. Hierfür eignen sich Wälzlager besonders. Alle übrigen Lager, also das erste Lager 10 und das zweite Lager 11, haben bei optimaler Ausrichtung und Justierung weder Drehbewegungen noch Längsbewegungen auszugleichen. Lediglich für die Fälle, in denen es zu Fertigungs- oder Montagetoleranzen oder zu Verformungen kommt, treten Ausgleichsbewegungen in den Lagern auf. Bei diesen Bewegungen handelt es sich entweder um drehende Hin- und Herbewegungen oder um lineare Hin- und Herbewegungen, so dass hier Gleitlager zum Einsatz kommen können. Die Lager sind getrennt voneinander und nicht, zum Beispiel, durch einen Kugelkopf dargestellt, da zum Beispiel bei der Verwendung eines Kugelkopfes nicht konstruktiv definiert wäre, ob die Drehung des Antriebselements 2 um die Hochachse Z von dem dritten Lager 12 bzw. dem Nadellager 23 oder dem Kugelkopf ausgeglichen wird. Aufgrund von Schleppmomenten innerhalb des dritten Lagers 12 könnte es auch zu Drehbewegungen im Kugelkopf kommen, was zu Passungsrost führen kann.

Alle Lager 10, 11, 12 weisen eine gemeinsame Schmiermittelversorgung auf. In dem Antriebselement 2 ist ein Schmiernippel 28 vorgesehen, der in einen radial verlaufenden Schmierkanal 29 führt. Dieser Schmierkanal 29 mündet wiederum in einen axial verlaufenden Schmiermittelkanal 30, der in einer Stirnfläche 31 des Lagerzapfens 21 endet und somit in die Lagerbohrung 22 führt. Hierüber ist das Nadellager 23 geschmiert. Von dem axial verlaufenden Schmierkanal 30 zweigt ein wiederum radial verlaufender Schmierkanal 32 ab, der zu einer Außenumfangsfläche 33 des Lagerzapfens 21 führt. Dieser radial verlaufende Schmierkanal 32 mündet zwischen zwei Nadelreihen 34, 35 des Nadellagers 23, wobei die beiden Nadelreihen 34, 35 entlang der Hochachse Z hintereinander angeordnet sind. Der radial verlaufende Schmierkanal 32 ist derart positioniert, dass er, je nach Axialposition des Lagerzapfens 21 innerhalb der Lagerbohrung 22, zumindest annähernd einen axial verlaufenden Schmierkanal 36 bei der Drehung des Antriebselements 2 überstreicht, wobei der axial verlaufende Schmierkanal 36 in dem Lagerzapfen 25 des zweiten Lagers 11 angeordnet ist. Dieser axial verlaufende Schmierkanal 36 führt zu einer Stirnfläche 37 des Lagerzapfens 25 des zweiten Lagers 11 und mündet somit in der Lagerbohrung 26 des zweiten Lagers 11, um die Gleitlagerung zwischen dem Lagerzapfen 25 und der Lagerbohrung 26 zu schmieren. Durch den Lagerspalt zwischen dem Lagerzapfen 25 und der Innenumfangsfläche 39 der Lagerbohrung 26 des zweiten Lagers 11 kann Schmiermittel in einen Ringraum 40 gelangen, der durch eine Umfangsnut 41 in dem Lagerzapfen 25 und der Innenumfangsfläche 39 der Lagerbohrung 26 gebildet ist. Darüber hinaus kann, wie beispielhaft in Figur 3 dargestellt ist, in der Innenumfangsfläche 39 eine Schraubennut 38 vorgesehen sein, um Schmiermittel von dem Bereich der Stirnfläche 37 des Lagerzapfens 25 zum Ringraum 40 zu führen.

Die Umfangsnut 41 ist in axialer Richtung derart lang ausgebildet, dass, unabhängig von der axialen Position des Lagerzapfens 25 in der Lagerbohrung 26, der Ringraum 40 stets in fluidischer Kommunikation zu einem Schmierkanal 42 im ersten Gelenkelement 5 steht, wobei dieser Schmierkanal 42 zum ersten Lager 10 führt, um dort die Gleitlagerung abschmieren zu können.

Somit ist durch das Einbringen von Schmiermitteln in nur einen Schmiernippel 28 das Abschmieren aller drei Lager 10, 11 und 12 möglich.

### Bezugszeichenliste

- 1: Verbindungsanordnung
- 2: Antriebselement
- 3: Abtriebselement
- 4: Ausgleichsanordnung
- 5: erstes Gelenkelement
- 6: zweites Gelenkelement
- 7: Mähmesser
- 8: Messerschiene
- 9: Messerklinge
- 10: erstes Lager
- 11: zweites Lager
- 12: drittes Lager
- 13: Lagerzapfen (des ersten Lagers)
- 14: Lagerbohrung (des ersten Lagers)
- 15: Mutter
- 16: Gewinde
- 17: Schulter
- 18: Dichtring
- 19: Dichtring
- 20: Messeranschlussabschnitt
- 21: Lagerzapfen (des dritten Lagers)
- 22: Lagerbohrung (des dritten Lagers)
- 23: Nadellager
- 24: Dichtring
- 25: Lagerzapfen (des zweiten Lagers)
- 26: Lagerbohrung (des zweiten Lagers)
- 27: Dichtring
- 28: Schmiernippel
- 29: Schmierkanal
- 30: Schmierkanal
- 31: Stirnfläche
- 32: Schmierkanal
- 33: Außenumfangsfläche
- 34: Nadelreihe
- 35: Nadelreihe
- 36: Schmierkanal
- 37: Stirnfläche
- 38: Schraubennut
- 39: Innenumfangsfläche
- 40: Ringraum
- 41: Umfangsnut
- 42: Schmierkanal

- X: Messerachse
- Y: Längsachse
- Z: Hochachse

## Patentansprüche

1. Verbindungsanordnung (1) zum Verbinden eines Mähmesserantriebs mit einem entlang einer Messerachse (X) hin- und hergehend bewegbaren Mähmesser (7) umfassend:
ein Antriebselement (2) zum Verbinden der Verbindungsanordnung (1) mit einem Mähmesserantrieb, ein Abtriebselement (3) zum Verbinden der Verbindungsanordnung (1) mit dem Mähmesser (7), und eine Ausgleichsanordnung (4), wobei das Antriebselement (2) und das Abtriebselement (3) mittels der Ausgleichsanordnung (4) um drei rechtwinklig zueinander angeordnete Drehachsen (X, Y, Z) zueinander drehbar und entlang zumindest zwei der genannten Drehachsen (Y, Z) zueinander verschiebbar sind,
**dadurch gekennzeichnet,**
**dass** je Drehachse (X, Y, Z) der Ausgleichsanordnung (4) ein separates Lager (10, 11, 12) vorgesehen ist, über das das Antriebselement (2) und das Abtriebselement (3) zueinander drehbar sind.

2. Verbindungsanordnung nach Anspruch 1,
**dadurch gekennzeichnet, dass** das Antriebselement (2) und das Abtriebselement (3) über zwei der genannten Lager (11, 12) zueinander verschiebbar sind.

3. Verbindungsanordnung nach einem der Ansprüche 1 oder 2,
**dadurch gekennzeichnet, dass** die Ausgleichsanordnung (4) ein erstes Gelenkelement (5) und ein zweites Gelenkelement (6) aufweist,
dass das Abtriebselement (3) über ein erstes Lager (10) um eine erste Drehachse (X) der genannten Drehachsen drehbar mit dem ersten Gelenkelement (5) verbunden ist,
dass das erste Gelenkelement (5) über ein zweites Lager (11) um eine zweite Drehachse (Y) der genannten Drehachsen drehbar mit dem zweiten Gelenkelement (6) verbunden ist und
dass das zweite Gelenkelement (6) über ein drittes Lager (12) um eine dritte Drehachse (Z) der genannten Drehachsen drehbar mit dem Antriebselement (2) verbunden ist.

4. Verbindungsanordnung nach Anspruch 3,
**dadurch gekennzeichnet, dass** das erste Gelenkelement (5) und das zweite Gelenkelement (6) über das zweite Lager (11) entlang der zweiten Drehachse (Y) zueinander verschiebbar sind.

5. Verbindungsanordnung nach einem der Ansprüche 3 oder 4,
**dadurch gekennzeichnet, dass** das Antriebselement (2) und das zweite Gelenkelement (6) über das dritte Lager (12) entlang der dritten Drehachse (Z) zueinander verschiebbar sind.

6. Verbindungsanordnung nach einem der Ansprüche 3 bis 5,
**dadurch gekennzeichnet, dass** das zweite Lager (11) und das dritte Lager (12) jeweils einen Lagerzapfen (21, 25) und eine Lagerbohrung (22, 26), in der der Lagerzapfen (21, 25) drehbar und axial verschiebbar aufgenommen ist, aufweisen.

7. Verbindungsanordnung nach einem der Ansprüche 1 bis 6,
**dadurch gekennzeichnet, dass** sämtliche Lager (10, 11, 12) eine gemeinsame Schmiermittelversorgung aufweisen.

8. Verbindungsanordnung nach Anspruch 7,
**dadurch gekennzeichnet, dass** ein Schmiernippel (28) vorgesehen ist, der über Schmierkanäle (29, 30, 32, 36, 42) mit allen Lagern verbunden ist.

## Claims

1. Connecting arrangement (1) for connecting a mower knife drive to a mower knife (7) movable reciprocatingly along a knife axis (X), comprising:
a driving element (2) for connecting the connecting arrangement (1) to a mower knife drive,
an output element (3) for connecting the connecting arrangement (1) to the mower knife (7), and
a compensation arrangement (4), wherein the driving element (2) and the output element (3) are, by means of the compensation arrangement (4), rotatable around three axes of rotation (X, Y, Z) arranged at a right angle to each other and displaceable along at least two of the named axes of rotation (Y, Z) relative to each other,
**characterised in**
**that** for each axis of rotation (X, Y, Z) of the compensation arrangement (4) a separate bearing (10, 11, 12) is provided, by means of which the driving element (2) and the output element (3) are rotatable relative to each other.

2. Connecting arrangement according to claim 1,
**characterised in**
**that** the driving element (2) and the output element (3) are displaceable relative to each other by means of two of the named bearings (11, 12).

3. Connecting arrangement according to any one of claims 1 or 2,
**characterised in**
**that** the compensation arrangement (4) has a first joint element (5) and a second joint element (6),
**that** the output element (3) is connected rotatably via a first bearing (10) around a first axis of rotation (X) of the named axes of rotation to the first joint element (5),
**that** the first joint element (5) is connected rotatably via a second bearing (11) around a second axis of rotation (Y) of the named axes of rotation to the second joint element (6) and
**that** the second joint element (6) is connected rotatably via a third bearing (12) around a third axis of rotation (Z) of the named axes of rotation to the driving element (2).

4. Connecting arrangement according to claim 3,
**characterised in**
**that** the first joint element (5) and the second joint element (6) are slidable relative to each other via the second bearing (11) along the second axis of rotation (Y).

5. Connecting arrangement according to any one of claims 3 or 4,
**characterised in**
**that** the driving element (2) and the second joint element (6) are slidable relative to each other via the third bearing (12) along the third axis of rotation (Z).

6. Connecting arrangement according to any one of claims 3 to 5,
**characterised in**
**that** the second bearing (11) and the third bearing (12) each have a bearing journal (21, 25) and a bearing bore (22, 26), in which the bearing journal (21, 25) is accommodated rotatably and axially displaceable.

7. Connecting arrangement according to any one of claims 1 to 6,
**characterised in**
**that** all bearings (10, 11, 12) have a common lubricant supply.

8. Connecting arrangement according to claim 7,
**characterised in**
**that** a lubrication nipple (28) is provided, which is connected via lubrication channels (29, 30, 32, 36, 42) to all bearings.

## Revendications

1. Ensemble de liaison (1) pour relier un entraînement de lame de fauchage à une lame de fauchage (7) mobile dans le sens aller et retour le long d'un axe de lame (X), comprenant :
un élément menant (2) pour relier l'ensemble de liaison (1) à un entraînement de lame de fauchage,
un élément mené (3) pour relier l'ensemble de liaison (1) à la lame de fauchage (7), et
un dispositif d'équilibrage (4), dans lequel l'élément menant (2) et l'élément mené (3) peuvent tourner l'un par rapport à l'autre au moyen du dispositif d'équilibrage (4) autour de trois axes de rotation (X, Y, Z) disposés en angle droit entre eux et de manière à pouvoir coulisser l'un par rapport à l'autre le long d'au moins deux des axes de rotation (Y, Z) mentionnés,
**caractérisé en ce que**,
par axe de rotation (X, Y, Z) du dispositif d'équilibrage (4), un palier séparé (10, 11, 12) est prévu via lequel l'élément menant (2) et l'élément mené (3) peuvent tourner l'un par rapport à l'autre.

2. Ensemble de liaison selon la revendication 1,
**caractérisé en ce que** l'élément menant (2) et l'élément mené (3) peuvent coulisser l'un par rapport à l'autre via deux des paliers (11, 12) mentionnés.

3. Ensemble de liaison selon l'une des revendications 1 ou 2,
**caractérisé en ce que** le dispositif d'équilibrage (4) présente un premier élément d'articulation (5) et un deuxième élément d'articulation (6),
que l'élément mené (3) est relié via un premier palier (10) de manière rotative autour d'un premier axe de rotation (X) des axes de rotation mentionnés au premier élément d'articulation (5),
que le premier élément d'articulation (5) est relié via un deuxième palier (11) de manière rotative autour d'un deuxième axe de rotation (Y) des axes de rotation mentionnés au deuxième élément d'articulation (6), et
que le deuxième élément d'articulation (6) est relié via un troisième palier (12) de manière rotative autour d'un troisième axe de rotation (Z) des axes de rotation mentionnés à l'élément menant (2).

4. Ensemble de liaison selon la revendication 3,
**caractérisé en ce que** le premier élément d'articulation (5) et le deuxième élément d'articulation (6) peuvent coulisser l'un par rapport à l'autre via le deuxième palier (11) le long du deuxième axe de rotation (Y).

5. Ensemble de liaison selon l'une des revendications 3 ou 4,
**caractérisé en ce que** l'élément menant (2) et le deuxième élément d'articulation (6) peuvent coulisser l'un par rapport à l'autre via le troisième palier (12) le long du troisième axe de rotation (Z).

6. Ensemble de liaison selon l'une des revendications 3 à 5,
**caractérisé en ce que** le deuxième palier (11) et le troisième palier (12) présentent respectivement un tourillon (21, 25) et un alésage de palier (22, 26) dans lequel le tourillon (21, 25) est réceptionné de manière rotative et coulissante axialement.

7. Ensemble de liaison selon l'une des revendications 1 à 6,
**caractérisé en ce que** tous les paliers (10, 11, 12) présentent une alimentation en lubrifiant commune.

8. Ensemble de liaison selon la revendication 7,
**caractérisé en ce qu'**un graisseur (28) est prévu, lequel est relié via des canaux de lubrification (29, 30, 32, 36, 42) à tous les paliers.
